# EUROPEAN PATENT APPLICATION

(11) **EP 4 050 854 A1**
(43) Date of publication of application: **31.08.2022**
(21) Application number: 20889525.0
(22) Date of filing: 20.11.2020
(51) Int. Cl.: H04L 12/703

(54) **MESSAGE TRANSMISSION PATH SWITCHING METHOD, DEVICE AND SYSTEM**

(30) Priority: 22.11.2019 CN 201911158723
(71) Applicant: Huawei Technologies Co., Ltd., Shenzhen, Guangdong 518129 (CN)
(72) Inventor: LIU, Guoliang, Shenzhen, Guangdong 518129 (CN)
(74) Representative: Isarpatent
(86) International application number: PCT/CN2020/130280
(87) International publication number: WO 2021/098806

(57) **Abstract**

This application discloses a packet transmission path switching method. The method includes: After a first PE receives an Ethernet segment ES auto-discovery AD route sent by a second PE, the first PE establishes a bidirectional forwarding detection BFD session with the second PE based on the ES-AD route; based on the fact that the first PE determines that a status of the BFD session is a disconnected state, the first PE determines that a first link between the second PE and a first CE is faulty; and the first PE quickly switches a packet transmitted over a second link between the first PE and the second PE to a third link between the first PE and a third PE. This application implements fast and accurate switching of a packet transmission path.

## Description

This application claims priority to Chinese Patent Application No. 201911158723.3, filed with the China National Intellectual Property Administration on November 22, 2019 and entitled "PACKET TRANSMISSION PATH SWITCHING METHOD, DEVICE, AND SYSTEM", which is incorporated herein by reference in its entirety.

### TECHNICAL FIELD

Embodiments of this application relate to the communications field, and in particular, to a packet transmission path switching method, a device, and a system.

### BACKGROUND

An Ethernet virtual private network (Ethernet virtual private network, EVPN) is a Layer 2 virtual private network (virtual private network, VPN) technology. A control plane uses a multiprotocol border gateway protocol (multiprotocol-border gateway protocol, MP-BGP) to advertise EVPN routing information. A data plane forwards a packet in virtual extensible local area network (virtual extensible local area network, VXLAN) encapsulation mode. To implement interworking between sites, an EVPN instance is established on a provider edge device (provider edge device, PE) on a carrier backbone network, and a customer edge device (customer edge device, CE) of each site is accessed.

On an EVPN network, a communication connection is established between a first CE and a second CE, and the second CE sends a packet to the first CE. A second PE, a first PE, and a third PE are configured to forward the packet used for communication between the first CE and the second CE. The second PE, the first PE, and the third PE establish an EVPN neighbor relationship with each other. The second CE is connected to the first PE, the first PE is separately connected to the second PE and the third PE, and the second PE and the third PE are separately connected to the first CE. A type of the connection between the second CE and the first PE is a CE single-homing networking type. A type of the connection between the first CE and the second PE and a type of the connection between the first CE and the third PE are a CE multi-homing networking type. The CE multi-homing networking type may support load balancing. After the second CE sends the packet to the first PE, the first PE sends the packet to the second PE and/or the third PE, and then the second PE and/or the third PE forwards the data packet to the first CE. When a link established between the second PE and the first CE is faulty, the second PE can sense that the link is faulty. In this case, the second PE sends an Ethernet segment auto-discovery (Ethernet segment auto discovery, ES-AD) route to the first PE, and the ES-AD route sent by the second PE to the first PE is used to indicate that the link between the second PE and the first CE is faulty. Further, after the first PE receives the ES-AD route sent by the second PE, the first PE forwards, to the third PE, downlink traffic sent to the second PE, to implement packet transmission path switching.

In actual network application, when the communications link established between the second PE and the first CE is faulty, the second PE sends the ES-AD route to the first PE, where the ES-AD route is used to indicate that the link established between the second PE and the first CE is faulty. In this case, if a delay occurs on sending of the ES-AD route, a switching speed of a packet transmission path of the first PE is slow.

### SUMMARY

Embodiments of this application provide a packet transmission path switching method and a related device, to quickly switch a packet transmission path.

A first aspect of the embodiments of this application provides a packet transmission path switching method, where the method includes: A first provider edge PE receives an Ethernet segment ES auto-discovery AD route sent by a second PE, where the ES-AD route is used to indicate that a first link is successfully established between the second PE and a first customer edge device CE; the first PE establishes a bidirectional forwarding detection (bidirectional forwarding detection, BFD) session with the second PE based on the ES-AD route, where the BFD session is used to detect a connection status of the first link; and the first PE determines, based on the fact that the BFD session is in a disconnected state, that the first link is faulty; and the first PE switches a packet transmitted over a second link between the first PE and the second PE to a third link between the first PE and a third PE, where the third PE and the second PE separately establish a connection with the first CE.

After the first PE receives the Ethernet segment ES auto-discovery AD route sent by the second PE, the first PE establishes a bidirectional forwarding detection BFD session with the second PE based on the ES-AD route. If the first PE determines that the second PE sets a status of the BFD session to the disconnected state, the first PE determines that the first link between the second PE and the first CE is faulty, the first PE fast switches the packet transmitted over the second link between the first PE and the second PE to the third link between the first PE and the third PE. In this application, a defect that a packet transmission path switching speed is slow when ES-AD route sending is delayed is avoided, and fast packet transmission path switching is implemented.

In a possible implementation of the first aspect, the foregoing step that the first PE determines, based on the fact that the BFD session is in a disconnected state, that the first link is faulty includes: The first PE sends a probe packet to the second PE; the first PE determines that no response packet returned by the second PE for the probe packet is received; and in response to the fact that the first PE determines that no response packet returned by the second PE for the probe packet is received, the first PE determines that the first link is faulty.

In this possible implementation, the first PE sends the probe packet to the second PE, and if the first PE receives the response packet returned by the second PE for the probe packet, it is proved that the status of the BFD session between the first PE and the second PE is a connected state. If the first PE does not receive the response packet returned by the second PE for the probe packet, the first PE determines that the status of the BFD session is the disconnected state. This possible implementation improves the implementability of the solution.

In a possible implementation of the first aspect, before the foregoing step that the first PE sends a probe packet to the second PE, the method further includes: The first PE sets a probe period of the probe packet, where one probe period includes a time interval for continuously transmitting two probe packets; and that the first PE determines that no response packet returned by the second PE for the probe packet is received includes: The first PE determines that no response packet returned by the second PE for the probe packet is received within N probe periods, where N is a positive integer greater than zero.

In this possible implementation, the first PE configures the probe period of the probe packet, and the first PE may periodically send the probe packet to the second PE. If the first PE receives, within preset N periods, the response packet returned by the second PE for the probe packet, the first PE determines that the status of the BFD session is a connected state. If the first PE receives, within the preset N periods, no response packet returned by the second PE for the probe packet, the first PE determines that the status of the BFD session is the disconnected state. In this possible implementation, the first PE can more accurately determine whether the status of the BFD session is the disconnected state, so that accuracy of the solution is improved.

In a possible implementation of the first aspect, the foregoing step that the first PE switches a packet transmitted over a second link to a third link includes: The first PE switches, based on a target association relationship, the packet transmitted over the second link to the third link, where the target association relationship indicates that a status of the BFD session is associated with the third link.

In this possible implementation, the BFD session has a target association relationship with the third link, and the first PE may switch, based on the target association relationship, the packet transmitted over the second link to the third link. This possible implementation improves the implementability of the solution.

In a possible implementation of the first aspect, the foregoing step that the target association relationship includes a first association relationship and a second association relationship, and that the first PE switches, based on the target association relationship, the packet transmitted over the second link to the third link includes: The first PE determines, based on the first association relationship and the fact that the BFD session is in the disconnected state, that the second link is faulty, where the first association relationship indicates that the status of the BFD session is associated with the second link; and the first PE switches, based on the second association relationship, the packet transmitted over the second link to the third link, where the second association relationship indicates that the second link is associated with the third link.

In this possible implementation, the first PE determines, based on the first association relationship and the fact that the BFD session is in the disconnected state, that the second link is faulty, and then the first PE switches, based on the second association relationship, the packet transmitted over the second link to the third link. In this possible implementation, the first PE may more accurately switch the target packet to be transmitted over the link between the first PE and the second PE to the link between the first PE and the third PE, so that accuracy of the solution is improved.

A second aspect of the embodiments of this application provides a packet transmission path switching method, where the method includes: A second provider edge PE establishes a first link with a first customer edge device CE; the second PE sends an Ethernet segment ES auto-discovery AD route to the first PE, where the ES-AD route is used to indicate that the second PE successfully establishes the first link with the first CE, and the ES-AD route is used to instruct the first PE to establish a bidirectional forwarding detection BFD session with the second PE; the second PE establishes a BFD session with the first PE, where the BFD session is used to obtain a connection status of the first link between the second PE and the first CE; the second PE determines that the first link is faulty; and the second PE sets a status of the BFD session to a disconnected state.

In the foregoing method, after the first link between the second PE and the first CE is successfully established, the second PE may send the ES-AD route to the first PE. If the second PE establishes the BFD session with the first PE, and the second PE determines that the first link is faulty, the second PE sets the status of the BFD session to the disconnected state, so that the first PE switches the packet transmitted over the second link between the first PE and the second PE to the third link between the first PE and the third PE. In this application, a defect that a packet transmission path switching speed is slow when ES-AD route sending is delayed is avoided, and fast packet transmission path switching is implemented.

In a possible implementation of the second aspect, the foregoing step that the second PE determines that the first link is faulty includes: If the second PE determines that a signal status of a tracking interface is a faulty state, the second PE determines that the first link is faulty, where the tracking interface is an interface used by the second PE to establish the first link with the first CE. That the second PE sets a status of the BFD session to a disconnected state includes: The second PE sets the status of the BFD session to the disconnected state based on the faulty state of the tracking interface and a third association relationship, where the third association relationship indicates that the signal status of the tracking interface is associated with the status of the BFD session.

In this possible implementation, after the second PE determines that the signal status of the tracking interface is the faulty state, the second PE determines that the first link is faulty. The second PE sets the status of the BFD session to the disconnected state based on the third association relationship. This possible implementation improves accuracy of the solution.

In a possible implementation of the second aspect, after the foregoing step that the second PE sets a status of the BFD session to a disconnected state, the method further includes: The second PE receives a probe packet sent by the first PE; and the second PE stops returning a response packet to the first PE for the probe packet.

In this possible implementation, after the second PE sets the status of the BFD session to the disconnected state, when receiving the probe packet sent by the first PE, the second PE stops returning the response packet to the first PE for the probe packet. This possible implementation improves the implementability of the solution.

In a possible implementation of the second aspect, after the foregoing step that the second PE sets a status of the BFD session to a disconnected state, the method further includes: the second PE receives a probe packet sent by the first PE, where a probe period of the probe packet includes a time interval for continuously transmitting two probe packets, and the time interval between the two adjacent probe packets is preset duration; and the second PE stops returning a response packet to the first PE in N probe periods for the probe packet, where N is a positive integer greater than zero.

In this possible implementation, after the second PE sets the status of the BFD session to the disconnected state, when the second PE receives the probe packet sent by the first PE, the second PE stops, within the N probe periods, sending the probe packet to the first PE. This possible implementation improves the implementability of the solution.

A third aspect of this application provides a provider edge. The provider edge is configured to perform the method in the first aspect or any possible implementation of the first aspect. Specifically, the apparatus includes modules or units configured to perform the method according to any one of the first aspect or the possible implementations of the first aspect.

A fourth aspect of this application provides a provider edge. The provider edge is configured to implement the method in the second aspect or any possible implementation of the second aspect. Specifically, the apparatus includes modules or units configured to perform the method according to any one of the second aspect or the possible implementations of the second aspect.

A fifth aspect of this application provides a provider edge, where the provider edge includes at least one processor, a memory, and a communications interface. The processor is coupled to the memory and the communications interface. The memory is configured to store instructions, the processor is configured to execute the instructions, and the communications interface is configured to communicate with another network element under control of the processor. When the instructions are executed by the processor, the processor is enabled to perform the method according to any one of the first aspect or the possible implementations of the first aspect.

A sixth aspect of this application provides a provider edge, where the provider edge includes at least one processor, a memory, and a communications interface. The processor is coupled to the memory and the communications interface. The memory is configured to store instructions, the processor is configured to execute the instructions, and the communications interface is configured to communicate with another network element under control of the processor. When the instructions are executed by the processor, the processor is enabled to perform the method according to any one of the second aspect or the possible implementations of the second aspect.

A seventh aspect of this application provides a computer-readable storage medium. The computer-readable storage medium stores program code, and the program enables a provider edge to perform the method according to any one of the first aspect or the possible implementations of the first aspect.

An eighth aspect of this application provides a computer-readable storage medium. The computer-readable storage medium stores program code, and the program enables a provider edge to perform the method according to any one of the second aspect or the possible implementations of the second aspect.

A ninth aspect of this application provides a packet transmission path switching system, including a first provider edge, a second provider edge, and at least one customer edge device, where the first provider edge is a provider edge that implements the method in any one of the first aspect or the possible implementations of the first aspect, and the second provider edge is a provider edge that implements the method according to any one of the second aspect or the possible implementations of the second aspect.

For technical effects brought by any one of the third aspect, the fifth aspect, the seventh aspect, or the possible implementations thereof, refer to the technical effects brought by the first aspect or the different possible implementations of the first aspect. Details are not described herein again.

For technical effects brought by any one of the fourth aspect, the sixth aspect, the eighth aspect, or the possible implementations thereof, refer to the technical effects brought by the second aspect or the different possible implementations of the second aspect. Details are not described herein again.

### BRIEF DESCRIPTION OF DRAWINGS

FIG. 1 is a schematic diagram of an application scenario of a packet transmission path switching system according to an embodiment of this application;
FIG. 2 is a schematic flowchart of a packet transmission path switching method according to an embodiment of this application;
FIG. 3 is a schematic flowchart of a packet transmission path switching method according to an embodiment of this application;
FIG. 4 is a schematic diagram of a packet format of an ES-AD route according to an embodiment of this application;
FIG. 5 is a schematic diagram of a structure of a provider edge according to an embodiment of this application;
FIG. 6 is a schematic diagram of a structure of a provider edge according to an embodiment of this application;
FIG. 7 is another schematic diagram of a structure of a provider edge according to an embodiment of this application; and
FIG. 8 is another schematic diagram of a structure of a provider edge according to an embodiment of this application.

### DESCRIPTION OF EMBODIMENTS

The following describes embodiments of this application with reference to the accompanying drawings.

In the specification, claims, and the accompanying drawings of this application, the terms "first", "second", and the like are intended to distinguish similar objects but do not necessarily indicate a specific order or sequence. It should be understood that data termed in such a way is interchangeable in proper circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a series of steps or units is not necessarily limited to those listed steps or units, but may include other steps or units not listed or inherent to such a process, method, product, or device.

Embodiments of this application provide a packet transmission path switching method, to quickly switch a packet transmission path.

To better understand the packet transmission path switching method in the embodiments of this application, the following describes a scenario to which the embodiments of this application are applied.

An EVPN is a VPN technology applied to Layer 2 network interconnection. The EVPN technology uses a mechanism similar to a border gateway protocol (border gateway protocol, BGP), and defines new network layer reachability information (network layer reachability information, NLRI) based on the BGP, namely, EVPN NLRI. The EVPN NLRI defines several new BGP EVPN route types, for example, a Type 2 route, which is also referred to as a physical address (media access control, MAC) route or an IP route, a Type 3 route, which is also referred to as an inclusive multicast route, and a Type 5 route, which is also referred to as an IP prefix route. These routes are used to learn and advertise MAC addresses between different PEs on a Layer 2 network.

After a BGP neighbor relationship is established between PEs, the PEs may transmit an ES-AD route to each other. The ES-AD route can notify other PEs of reachability of a local PE to a MAC address of an access site, that is, whether the PE is reachable to the connected site. The ES-AD route is mainly used for fast convergence, redundancy mode, and split horizon.

BFD is a network protocol that can quickly detect path faults between adjacent transmission engines in a low-overhead manner, including faults on interfaces, data links, or transmission engines. BFD may provide fault detection even on physical media that do not support any type of fault detection. BFD establishes a session between two sites through a specific link. If there are a plurality of links between two systems, a plurality of BFD sessions can be established to monitor each of the links. The session is established through a three-way handshake and is disconnected in the same manner.

The BFD session has two states: "Up", indicating that the BFD session is in a connected state, and "Down", indicating that the BFD session is faulty or is in a disconnected state.

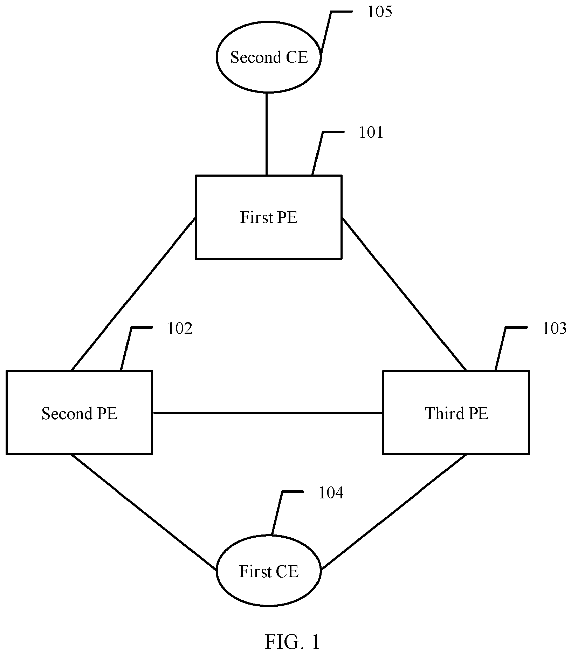

FIG. 1 is a schematic diagram of an application scenario of a packet transmission path switching system according to an embodiment of this application.

Refer to FIG. 1. The packet transmission path switching system provided in this embodiment of this application may include:
a first PE 101, a second PE 102, a third PE 103, a first CE 104, and a second CE 105. The first CE 104 accesses the second PE 102 and the third PE 103. The second CE 105 accesses the first PE 101.

In this embodiment of this application, only three PEs 101, 102, 103, and two CEs 104 and 105 are used as examples for description.

Optionally, in actual application, an application scenario of this embodiment of this application may include more PEs or CEs. This is not specifically limited herein.

A PE is located at an edge of a carrier network. One end of the PE is connected to the carrier network, and the other end is connected, through a network, to a VPN device that is connected to one or more CEs.

A CE is a VPN device that directly faces a user and is connected to a PE.

On an EVPN, a CE can be multi-homed or single-homed to PEs. As shown in FIG. 1, a type of connection between the second CE and the first PE is a CE single-homing networking type. A type of connection between the first CE and the second PE and a type of connection between the first CE and the third PE belong to a CE multi-homing networking type. CE multi-homing networking may support load balancing.

The first CE 104 is usually connected to the second PE 102 and the third PE 103 through a wireless network, or certainly may be connected through a wired network. If the connection is performed through the wired network, the optical network is usually used. If the connection is performed through the wireless network, a specific connection type may be a cellular wireless network, a Wi-Fi network, or another type of wireless network.

The second CE 105 and the first PE 101 are usually connected through the wireless network, or certainly may be connected through the wired network. If the connection is performed through the wired network, the optical network is usually used. If the connection is performed through the wireless network, a specific connection type may be a cellular wireless network, a Wi-Fi network, or another type of wireless network.

A communication connection is established between the first CE 104 and the second CE 105, and the second CE 105 sends a packet to the first CE 104. The second PE 102, the first PE 101, and the third PE 013 are configured to forward the packet used for communication between the first CE 104 and the second CE 105, and the second PE 102, the first PE 101, and the third PE 103 establish an EVPN neighbor relationship with each other.

After the second CE sends the packet to the first PE, the first PE sends the packet to the second PE and/or the third PE, and then the second PE and/or the third PE forwards the data packet to the first CE.

Based on the packet transmission path switching system described in FIG. 1, the packet transmission path switching method provided in this embodiment of this application is described.

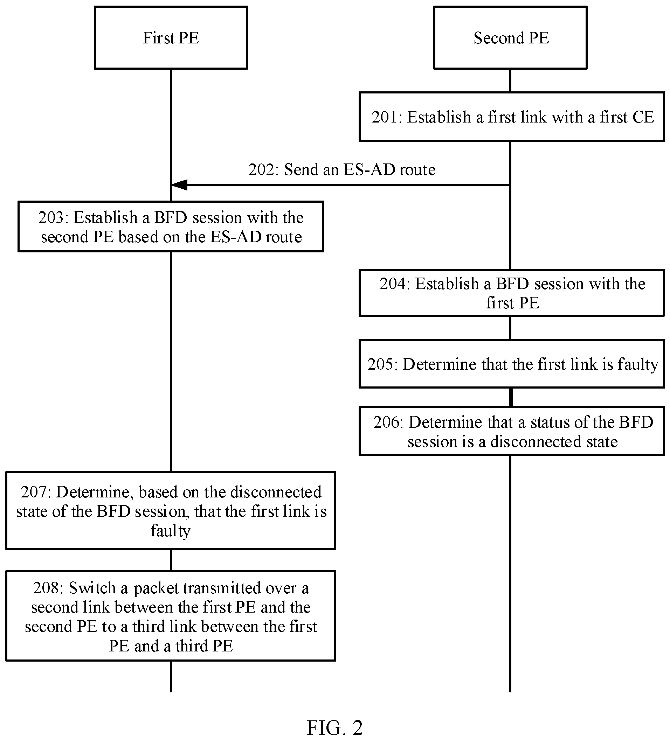

Refer to FIG. 2. An embodiment of a packet transmission path switching method according to an embodiment of this application includes the following steps.

201: A second PE establishes a first link with a first CE.

After the link between the second PE and the first CE is successfully established, the link established between the second PE and the first CE is named as the first link.

202: The second PE sends an ES-AD route to the first PE.

The second PE sends the ES-AD route to the first PE, where the ES-AD route is used to indicate that the second PE successfully establishes the first link with the first CE, and the ES-AD route may be further used to indicate that the first PE and the second PE establish a bidirectional forwarding detection BFD session.

203: The first PE establishes a BFD session with the second PE based on the ES-AD route.

The first PE establishes the BFD session with the second PE based on the ES-AD route, where the BFD session is used to detect a connection status of the first link.

204: The second PE establishes a BFD session with the first PE.

The second PE establishes the BFD session with the first PE, where the BFD session is used to detect the connection status of the first link. Based on a change of the connection status of the first link, a status of the BFD session may also be correspondingly changed.

205: The second PE determines that the first link is faulty.

206: The second PE sets the status of the BFD session to a disconnected state.

When the second PE determines that the first link between the second PE and the first CE is faulty, the second PE sets the status of the BFD session to the disconnected state, that is, disconnects the BFD session from the first PE; and further, notifies the first PE that the first link between the second PE and the first CE is faulty.

207: The first PE determines, based on the fact that the BFD session is in the disconnected state, that the first link is faulty.

208: The first PE switches a packet transmitted over a second link between the first PE and the second PE to a third link between the first PE and a third PE.

If the first PE determines that the status of the BFD session is the disconnected state, the first PE may determine that the first link is faulty. In this case, the first PE may switch the transmission path of the packet, and the first PE switches the packet transmitted over the second link to the third link. The third PE and the second PE separately establish connections with the first CE.

In an embodiment of this application, this application discloses a packet transmission path switching method. The method includes: after a first PE receives an Ethernet segment ES auto-discovery AD route sent by a second PE, the first PE establishes a bidirectional forwarding detection BFD session with the second PE based on the ES-AD route. If the first PE determines that the second PE sets a status of the BFD session to the disconnected state, the first PE determines that the first link between the second PE and the first CE is faulty, the first PE fast switches the packet transmitted over the second link between the first PE and the second PE to the third link between the first PE and the third PE. In this application, a defect that a packet transmission path switching speed is slow when ES-AD route sending is delayed is avoided, and fast packet transmission path switching is implemented.

In this embodiment of this application, for the step in which the second PE determines that the first link is faulty in step 205, a specific determining manner is described in detail in the following embodiments. Similarly, for the step that the second PE sets the status of the BFD session to the disconnected state mentioned in step 206, a specific execution manner is also described in detail in the following embodiments.

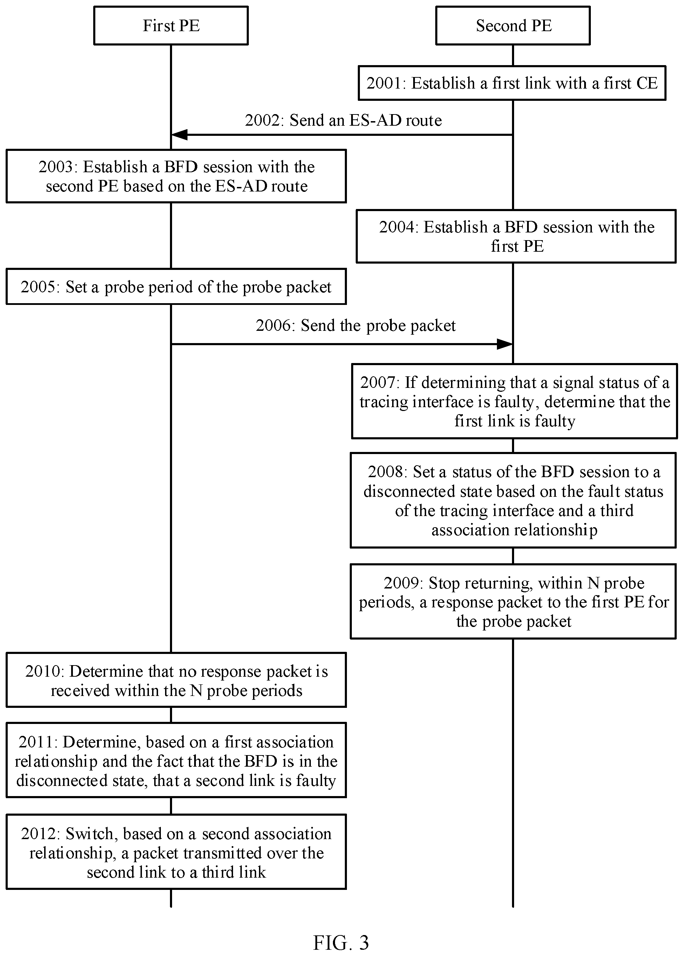

Refer to FIG. 3. An embodiment of a packet transmission path switching method according to an embodiment of this application includes the following steps.

2001: A second PE establishes a first link with a first CE.

A communication connection is established between the first CE and a second CE, and the second CE sends a packet to the first CE. The second PE, a first PE, and a third PE are configured to forward the packet used for communication between the first CE and the second CE. The second PE, the first PE, and the third PE establish an EVPN neighbor relationship with each other.

The second PE and the third PE are dual-homed to the first CE. When the second PE learns a MAC address of the first CE, the second PE establishes a link with the first CE, and the link established between the second PE and the first CE is referred to as the first link. After the first link is successfully established, the packet sent by the second CE to the first CE may be transmitted over the first link.

2002: The second PE sends an ES-AD route to the first PE.

When the first link is successfully established, the second PE is indicated to send the ES-AD route to the first PE, and the ES-AD route may be used to indicate that the second PE successfully establishes the first link with the first CE.

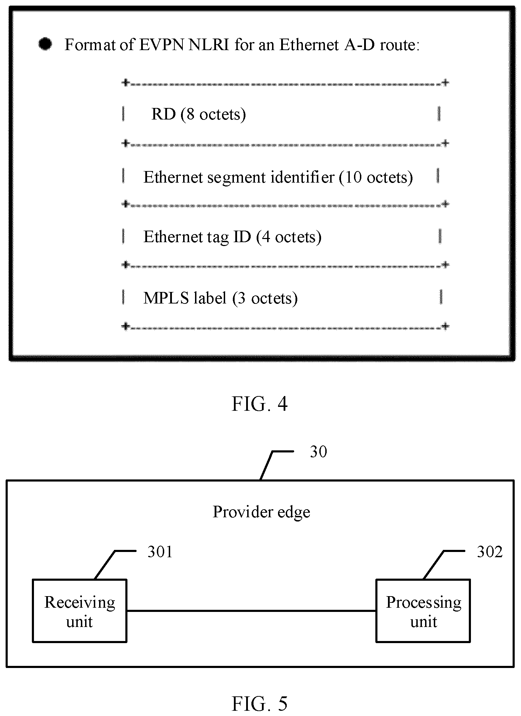

Optionally, as shown in FIG. 4, a packet format of the ES-AD route may include a route distinguisher (route distinguisher), an Ethernet segment identifier (ethernet segment identifier, ESI), an Ethernet tag ID (ethernet tag ID), and a multi-protocol label switching (multi-protocol label switching, MPLS) label.

The RD is used to identify an EVPN instance. Optionally, the field may be an RD value set in the EVPN instance, or may be a source IP address combination set on the PE. For example, X.X.X.X:0, which is merely used as an example herein, or may be another implementation. This is not specifically limited herein.

The ESI is used to represent a unique identifier defined for a connection between the PE and a CE. Optionally, the ESI may be used to indicate an identifier of an EVPN access-side physical link, or the ESI may indicate an identifier of an EVPN access-side logical link, or may indicate other content. This is not specifically limited herein.

The Ethernet tag ID is fixed to all Fs. A value of an MPLS label is fixed to 0.

In addition, the ES-AD route may be used to indicate that the first PE establishes a bidirectional forwarding detection BFD session with the second PE.

2003: The first PE establishes the BFD session with the second PE based on the ES-AD route.

The BFD session is a network detection mechanism, configured to quickly detect or monitor a forwarding connectivity status of a link or an IP route on a network. In this embodiment, the BFD session is used to detect, by using the second PE, a connection status of the first link between the second PE and the first CE.

After receiving the ES-AD route, the first PE indicates the first PE to dynamically establish the BFD session with the second PE. The establishment of the BFD session is a bidirectional establishment process. Therefore, the BFD session needs to be established through negotiation between the first PE and the second PE.

After the first PE receives the ES-AD route sent by the second PE, because the ES-AD route includes identification information of the second PE, the first PE may obtain the identification information included in the ES-AD route.

The identification information may include an IP address of the second PE, or may include an ESI of the first link established between the second PE and the first CE, or may be other information related to an identity of the first PE. This is not specifically limited herein.

The first PE obtains the identification information in the ES-AD route, and may generate a remote identifier of the second PE based on the identification information. The first PE may further generate a local identifier. The first PE generates the BFD control packet based on the local identifier and the remote identifier. The first PE sends the BFD control packet to the second PE based on the identification information in the ES-AD route and the remote identifier generated by the first PE, and negotiates with the second PE to establish the BFD session.

Optionally, the control packet may include not only the local identifier and the remote identifier, but also other content related to the BFD session. This is not specifically limited herein.

2004: The second PE establishes the BFD session with the first PE.

Because the BFD session is the bidirectional establishment process, there is an action of establishing the BFD session between the first PE and the second PE, and both the first PE and the second PED establish the same BFD session.

The BFD session established by the first PE with the second PE based on the ES-AD route in step 2003 is the same as the BFD session established by the second PE with the first PE in this step.

The second PE receives the BFD control packet sent by the first PE, and then obtains the local identifier of the first PE that is included in the BFD control packet. The second PE negotiates with the first PE by using the local identifier of the first PE to establish the BFD session.

2005: The first PE sets a probe period of a probe packet of the BFD session.

The probe period is a time interval at which two probe packets are consecutively transmitted, and duration of the probe period is preset duration. Optionally, the probe period may be 3 milliseconds, the probe period may be 10 milliseconds, or the probe period may be another time. This is not specifically limited herein.

2006: The first PE sends the probe packet to the second PE.

In this embodiment, a main operation mode of the BFD session is an asynchronous mode. In this mode, the first PE periodically sends the probe packet of the BFD session to the second PE. It may be understood that the period at which the first PE sends the probe packet to the second PE is the probe period configured by the first PE in step 2005.

2007: If the second PE determines that a signal status of a tracking interface is a faulty state, the second PE determines that the first link is faulty.

The second PE establishes the first link with the first CE by using the tracking interface. The second PE includes a link fault awareness module in a bottom-layer chip, and the link fault awareness module in the bottom-layer chip may sense the signal status of the tracing interface. If the first link connection is normal, the signal status of the tracking interface is a connected state. If the first link connection is faulty, the signal status of the tracking interface is the faulty state, the link fault awareness module in the bottom-layer chip senses that the signal status of the tracking interface is the faulty state, and the second PE determines that the first link is faulty.

2008: The second PE sets a status of the BFD session to a disconnected state based on the faulty state of the tracing interface and a third association relationship.

The third association relationship indicates that the signal status of the tracking interface is associated with the status of the BFD session, and when the signal status of the tracking interface is the connected state, the second PE sets the status of the BFD session to the connected state. When the signal status of the tracing interface is the faulty state, the second PE sets the status of the BFD session to the disconnected state.

When the status of the BFD session is the connected state, the status of the BFD session is displayed as an Up state. When the second PE sets the status of the BFD session to the disconnected state based on the faulty state of the tracing interface and the third association relationship, the second PE switches the status of the BFD session to a Down state.

2009: The second PE stops sending the probe packet to the first PE within N probe periods.

If the link fault awareness module in the bottom-layer chip senses that the signal status of the tracking interface is the faulty state, after the second PE sets the status of the BFD session to the disconnected state, the second PE stops, within the N probe periods, sending the probe packet to the first PE.

A specific quantity of N is determined by a user in advance. N may be 3, N may be 5, and N may be another value. This is not specifically limited herein.

2010: If the first PE determines that no response packet is received within the N probe periods, the first PE determines that the status of the BFD session is the disconnected state.

If the first PE does not receive a response packet returned for the probe packet within the N consecutive probe periods, it is considered that the status of the BFD session is Down, that is, it is considered that the second PE sets the status of the BFD session to the disconnected state.

2011: The first PE determines, based on a first association relationship and the fact that the BFD is in the disconnected state, that the second link is faulty.

In this embodiment, the first PE adds an identifier of the BFD session to a target entry.

Optionally, the target entry may be an active/standby relationship entry or a load balancing entry, or may be another entry. This is not specifically limited herein.

When the second PE and the third PE are dual-homed to the first CE in single-active mode, the target entry is the active/standby relationship entry. The second link between the first PE and the second PE is a primary link, and a third link between the first PE and the third PE is a backup link. When the primary link connection is normal, the packet sent by the second CE to the first CE is transmitted only over the primary link. In other words, the packet sent by the second CE to the first CE is transmitted only over the second link. When the primary link connection is faulty, the packet sent by the second CE to the first CE is transmitted only over the backup link. In other words, the packet sent by the second CE to the first CE is transmitted only over the third link.

The identifier of the BFD session is added to the active/standby relationship entry, to indicate that the status of the BFD session has the first association relationship with the second link. When the status of the BFD session is the disconnected state, the identifier of the BFD session in the active/standby relationship entry is the Down state, the first PE determines, based on the first association relationship, that the second link is faulty, and the first PE no longer uses the second PE as a target of a next hop of the route.

When the second PE and the third PE are dual-homed to the first CE in dual-active mode, the target entry is the load balancing entry. When the second link connection between the second PE and the first CE is normal, optionally, the packet sent by the second CE to the first CE may be transmitted over the second link between the first PE and the second PE, or may be transmitted over the third link between the first PE and the third PE. When the second link connection is faulty, the packet sent by the second CE to the first CE is transmitted only over the third link.

The identifier of the BFD session is added to the load balancing entry, to indicate that the status of the BFD session has the first association relationship with the second link. When the status of the BFD session is the disconnected state, the identifier of the BFD session ID in the load balancing entry is the Down state. The first PE determines, based on the first association relationship, that the second link is faulty, and the first PE no longer uses the second PE as the target of the next hop of the route.

2012: The first PE switches, based on the second association relationship, the packet transmitted over the second link to the third link.

Because the second PE and the third PE are dual-homed to the first PE, the packet forwarded by the first PE to the first CE may be sent to the first CE over the second link, or may be sent to the first CE over the third link. Therefore, both the second link and the third link have the second association relationship regardless of the active/standby relationship entry or the load balancing entry. After the first PE determines that the second link is faulty, the first PE switches, based on the second association relationship, the packet transmitted over the second link to the third link.

The foregoing describes the packet transmission path switching method. The following describes, with reference to accompanying drawings, a provider edge provided in an embodiment of this application. The provider edge may be the first PE in the foregoing embodiment, or may be the second PE in the foregoing embodiment.

As shown in FIG. 5, an embodiment of the provider edge 30 provided in this embodiment of this application includes a receiving unit 301 and a processing unit 302.

The receiving unit 301 is configured to receive an Ethernet segment ES auto-discovery AD route sent by a second PE, where the ES-AD route is used to indicate that a first link is successfully established between the second PE and a first CE.

The processing unit 302 is configured to: establish a bidirectional forwarding detection BFD session with the second PE based on the ES-AD route, where the BFD session is used to detect a connection status of the first link; further determine, based on the fact that the BFD session is in a disconnected state, that the first link is faulty; and therefore, switch a packet transmitted over a second link between a first PE and the second PE to a third link between the first PE and a third PE, where the third PE and the second PE respectively establish a connection with the first CE.

In this embodiment of this application, after the receiving unit 301 receives the Ethernet segment ES auto-discovery AD route sent by the second PE, the processing unit 302 establishes the bidirectional forwarding detection BFD session with the second PE based on the ES-AD route. If the processing unit 302 determines that the second PE sets a status of the BFD session to the disconnected state, the processing unit 302 determines that the first link between the second PE and the first CE is faulty. The processing unit 302 quickly switches the packet transmitted over the second link between the first PE and the second PE to the third link between the first PE and the third PE. In this application, a defect that a packet transmission path switching speed is slow when ES-AD route sending is delayed is avoided, and fast packet transmission path switching is implemented.

In a possible embodiment,
after a sending unit sends a probe packet to the second PE, if the receiving unit 301 determines that no response packet returned by the second PE for the probe packet is received, the receiving unit 301 may indicate the processing unit 302 to determine that the status of the BFD session is the disconnected state.

In a possible embodiment, the processing unit 302 is further configured to configure a probe period of the probe packet, where one probe period includes a time interval at which two probe packets are continuously transmitted. The receiving unit 301 may determine that no response packet is received within N probe periods, where N is a positive integer greater than zero.

In a possible embodiment, the processing unit 302 is configured to switch, based on a target association relationship, the packet transmitted over the second link to the third link, where the target association relationship indicates that the status of the BFD session is associated with the third link.

In a possible embodiment, the target association relationship includes a first association relationship and a second association relationship. The processing unit 302 may be configured to determine, based on the first association relationship and the fact that the BFD session is in the disconnected state, that the second link is faulty, where the first association relationship indicates that the status of the BFD session is associated with the second link. The processing unit 302 may be further configured to switch, based on the second association relationship, the packet transmitted over the second link to the third link, where the second association relationship indicates that the second link is associated with the third link.

It may be understood that the receiving unit 301 may receive the ES-AD route sent in step 202 in FIG. 2 and the ES-AD route sent in step 2002 in FIG. 3.

The processing unit 302 may perform actions performed in step 203, step 207, and step 208 in FIG. 2, and step 2003, step 2005, step 2010, step 2011, and step 2012 in FIG. 3.

The sending unit may perform the actions performed in step 2006 in FIG. 3.

It should be noted that because content such as information exchange and execution processes between the modules of the provider edge 30 is based on the same concept as the method embodiments of this application, technical effects of the content are the same as those of the method embodiments of the present invention. For specific content, refer to the foregoing description in the method embodiments of this application. Details are not described herein again.

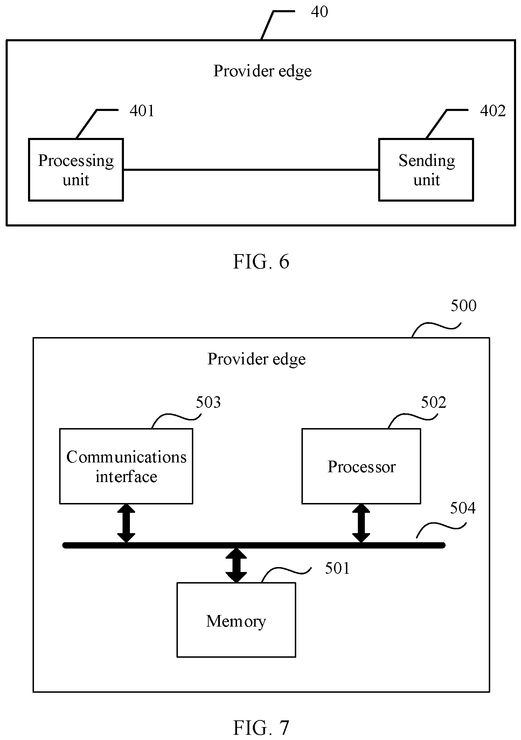

As shown in FIG. 6, an embodiment of the provider edge 40 provided in this embodiment of this application includes a processing unit 401 and a sending unit 402.

The processing unit 401 may be configured to establish a first link with a first client edge device CE. The sending unit 402 may be configured to send an Ethernet segment ES auto-discovery AD route to a first PE, where the ES-AD route is used to indicate that a second PE successfully establishes the first link with the first CE, and the ES-AD route is used to indicate that the first PE establishes a bidirectional forwarding detection BFD session with the second PE. The processing unit 401 may be further configured to establish the BFD session with the first PE, where the BFD session is used to detect a connection status of the first link, so that the processing unit 401 can determine that the first link is faulty, and set a status of the BFD session to a disconnected state.

In a possible embodiment, the processing unit 401 may be configured to determine that a signal status of a tracking interface is a faulty state. In this case, the processing unit determines that the first link is faulty, and the tracking interface is an interface that is on the second PE and that is used to establish the first link with the first CE. The processing unit may further set the status of the BFD session to the disconnected state based on the faulty state of the tracking interface and a third association relationship, where the third association relationship indicates that the signal status of the tracking interface is associated with the status of the BFD session.

In a possible embodiment, the device may further include a receiving unit. The receiving unit is further configured to receive a probe packet sent by the first PE; and the processing unit 401 is further configured to stop returning a response packet to the first PE for the probe packet.

In a possible embodiment, the receiving unit may be further configured to receive the probe packet sent by the first PE, where a probe period of the probe packet includes a time interval at which two probe packets are continuously transmitted. The processing unit 401 may be further configured to stop returning the response packet to the first PE in N probe periods for the probe packet, where N is a positive integer greater than zero.

It should be noted that because content such as information exchange and execution processes between the modules of the provider edge 40 is based on the same concept as the method embodiments of this application, technical effects of the content are the same as those of the method embodiments of the present invention. For specific content, refer to the foregoing description in the method embodiments of this application. Details are not described herein again.

It may be understood that the processing unit 401 may perform actions performed in step 201, step 204, step 205, and step 206 in FIG. 2, and step 2001, step 2004, step 2007, step 2008, and step 2009 in FIG. 3.

The sending unit 402 may perform actions performed in step 202 in FIG. 2 and step 2002 in FIG. 3.

The receiving unit may receive the probe packet sent in step 2006 in FIG. 3.

FIG. 7 is a schematic diagram of a structure of a provider edge according to an embodiment of this application. The provider edge 500 includes a processor 502, a communications interface 503, a memory 501, and a bus 504. The communications interface 503, the processor 502, and the memory 501 are connected to each other through the bus 504. The bus 504 may be a peripheral component interconnect (Peripheral Component Interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 7, but this does not mean that there is only one bus or only one type of bus. The provider edge 500 may implement functions of the provider edge in the embodiment shown in FIG. 5. The processor 502 and the communications interface 503 may perform corresponding functions of the provider edge in the foregoing method example.

The communications interface 503 is configured to support the provider edge 500 in performing the actions performed in step 2006 in FIG. 3, and may also receive the ES-AD route sent in step 202 in FIG. 2 and step 2002 in FIG. 3. The processor 502 is configured to support the provider edge 500 in performing actions performed in step 203, step 207, and step 208 in FIG. 2, and step 2003, step 2005, step 2010, step 2011, and step 2012 in FIG. 3. The memory 501 is configured to store program code and data of the provider edge 500.

The following describes the components of the provider edge in detail with reference to FIG. 7.

The memory 501 may be a volatile memory (volatile memory), such as a random-access memory (random-access memory, RAM); or a non-volatile memory (non-volatile memory), such as a read-only memory (read-only memory, ROM), a flash memory (flash memory), a hard disk drive (hard disk drive, HDD), or a solid-state drive (solid-state drive, SSD); or a combination of the foregoing types of memories. The memory 501 is configured to store program code, a configuration file, or other content that can implement the method in this application.

The processor 502 is a control center of a controller; and may be a central processing unit (central processing unit, CPU), or may be an application specific integrated circuit (application specific integrated circuit, ASIC), or one or more integrated circuits configured to implement the embodiments of this application, for example, one or more digital signal processors (digital signal processor, DSP), or one or more field programmable gate arrays (field programmable gate array, FPGA).

The communications interface 503 is configured to communicate with another PE.

In an example, the communications interface 503 is configured to receive the ES-AD route sent by the second PE, where the ES-AD route is used to indicate that the second PE successfully establishes the first link with the first CE.

In a possible implementation, the processor 502 runs or executes the software program and/or the module stored in the memory 501, and invokes the data stored in the memory 501, to perform the following functions.

If the first link between the second PE and the first CE is faulty, the processor 502 quickly switches a packet transmitted over a second link between a first PE and the second PE to a third link between the first PE and a third PE.

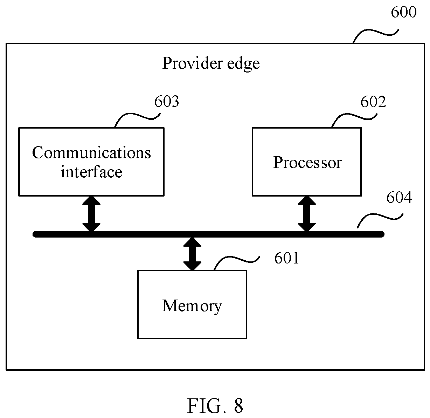

FIG. 8 is a schematic diagram of a structure of another device according to an embodiment of this application. The device is a provider edge. This provider edge 600 includes a processor 602, a communications interface 603, a memory 601, and a bus 604. The communications interface 603, the processor 602, and the memory 601 are connected to each other through the bus 604. The bus 604 may be a peripheral component interconnect (Peripheral Component Interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus. The provider edge 600 may implement functions of the provider edge in the embodiment shown in FIG. 6. The processor 602 and the communications interface 603 may perform corresponding functions of the provider edge in the foregoing method example.

The communications interface 603 is configured to support the provider edge 600 in performing the actions performed in step 202 in FIG. 2 and step 2002 in FIG. 3, and may also receive the probe packet sent in step 2006 in FIG. 3. The processor 602 is configured to support the provider edge 600 in performing the actions performed in step 201, step 204, step 205, and step 206 in FIG. 2, and step 2001, step 2004, step 2007, step 2008, and step 2009 in FIG. 3.

The following describes the components of the provider edge in detail with reference to FIG. 8.

The memory 601 may be a volatile memory (volatile memory), such as a random-access memory (random-access memory, RAM); or a non-volatile memory (non-volatile memory), such as a read-only memory (read-only memory, ROM), a flash memory (flash memory), a hard disk drive (hard disk drive, HDD), or a solid-state drive (solid-state drive, SSD); or a combination of the foregoing types of memories. The memory 601 is configured to store program code, a configuration file, or other content that can implement the method in this application.

The processor 602 is a control center of a controller; and may be a central processing unit (central processing unit, CPU), or may be an application specific integrated circuit (application specific integrated circuit, ASIC), or one or more integrated circuits configured to implement the embodiments of this application, for example, one or more digital signal processors (digital signal processor, DSP), or one or more field programmable gate arrays (field programmable gate array, FPGA).

The communications interface 603 is configured to communicate with another PE.

In an example, the communications interface 603 is configured to receive a probe packet sent by a first PE.

In a possible implementation, the processor 602 runs or executes the software program and/or the module stored in the memory 601, and invokes the data stored in the memory 601, to perform the following functions:
establishing a BFD session with the first PE, determining that the first link is faulty, and setting a status of the BFD session to a disconnected state, so that the first PE switches a packet transmitted over a second link between the first PE and the second PE to a third link between the first PE and a third PE, and fast switching of a packet transmission path is implemented.

This application further provides a packet transmission path switching system. The packet transmission path switching system includes the PE in FIG. 7 and the PE shown in FIG. 8, and has structures and functions shown in FIG. 7 and FIG. 8.

In a possible design, the provider edge further includes a memory, and the memory is configured to store a program instruction and data that are necessary for a provider edge. The packet transmission path switching system may include a chip and another discrete component.

In a possible design, a computer-readable storage medium is further provided. The computer-readable storage medium stores computer executable instructions. When at least one processor of the device executes the computer executable instructions, the device performs the methods described in some embodiments in FIG. 2 and FIG. 3.

A person of ordinary skill in the art may be aware that, in combination with the examples described in the embodiments disclosed in this specification, units and algorithm steps can be implemented by electronic hardware or a combination of computer software and electronic hardware. Whether the functions are performed by the hardware or the software depends on particular applications and design constraint conditions of the technical solutions. A person skilled in the art may use different methods to implement the described functions for each particular application, but it should not be considered that the implementation goes beyond the scope of the embodiments of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected depending on actual requirements to achieve the objectives of the solutions in the embodiments.

In addition, functional units in the embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of the embodiments of this application shall be subject to the protection scope of the claims.

## Claims

1. A packet transmission path switching method, comprising:
receiving, by a first provider edge PE, an Ethernet segment ES auto-discovery AD route sent by a second PE, wherein the ES-AD route is used to indicate that a first link is successfully established between the second PE and a first customer edge device CE;
establishing, by the first PE, a bidirectional forwarding detection BFD session with the second PE based on the ES-AD route, wherein the BFD session is used to detect a connection status of the first link; and
determining, by the first PE based on the fact that the BFD session is in a disconnected state, that the first link is faulty; and
switching, by the first PE, a packet transmitted over a second link between the first PE and the second PE to a third link between the first PE and a third PE, wherein the third PE and the second PE separately establish a connection with the first CE.

2. The method according to claim 1, wherein the determining, by the first PE based on the fact that the BFD session is in a disconnected state, that the first link is faulty comprises:
sending, by the first PE, a probe packet to the second PE;
determining, by the first PE, that no response packet returned by the second PE for the probe packet is received; and
in response to the determining, by the first PE, that no response packet returned by the second PE for the probe packet is received, determining, by the first PE, that the first link is faulty.

3. The method according to claim 2, wherein before the sending, by the first PE, a probe packet to the second PE, the method further comprises:
setting, by the first PE, a probe period of the probe packet, wherein one probe period comprises a time interval for continuously transmitting two probe packets; and
the determining, by the first PE, that no response packet returned by the second PE for the probe packet is received comprises:
determining, by the first PE, that no response packet returned by the second PE for the probe packet is received within N probe periods, wherein N is a positive integer greater than zero.

4. The method according to any one of claims 1 to 3, wherein the switching, by the first PE, a packet transmitted over a second link to a third link comprises:
switching, by the first PE based on a target association relationship, the packet transmitted over the second link to the third link, wherein the target association relationship indicates that a status of the BFD session is associated with the third link.

5. The method according to claim 4, wherein the target association relationship comprises a first association relationship and a second association relationship, and the switching, by the first PE based on the target association relationship, the packet transmitted over the second link to the third link comprises:
determining, by the first PE based on the first association relationship and the fact that the BFD session is in the disconnected state, that the second link is faulty, wherein the first association relationship indicates that the status of the BFD session is associated with the second link; and
switching, by the first PE based on the second association relationship, the packet transmitted over the second link to the third link, wherein the second association relationship indicates that the second link is associated with the third link.

6. A packet transmission path switching method, comprising:
establishing, by a second provider edge PE, a first link with a first customer edge device CE;
sending, by the second PE, an Ethernet segment ES auto-discovery AD route to a first PE, wherein the ES-AD route is used to indicate that the second PE successfully establishes the first link with the first CE, and the ES-AD route is used to instruct the first PE to establish a bidirectional forwarding detection BFD session with the second PE;
establishing, by the second PE, a BFD session with the first PE based on the ES-AD route, wherein the BFD session is used to detect a connection status of the first link;
determining, by the second PE, that the first link is faulty; and
setting, by the second PE, a status of the BFD session to a disconnected state in response to the determining, by the second PE, that the first link is faulty.

7. The method according to claim 6, wherein the determining, by the second PE, that the first link is faulty comprises:
determining, by the second PE based on the fact that a signal status of a tracking interface is a faulty state, that the first link is faulty, wherein the tracking interface is an interface used by the second PE to establish the first link with the first CE; and
the setting, by the second PE, a status of the BFD session to a disconnected state comprises:
setting, by the second PE, the status of the BFD session to the disconnected state based on the faulty state of the tracking interface and a third association relationship, wherein the third association relationship indicates that the signal status of the tracking interface is associated with the status of the BFD session.

8. The method according to claim 6 or 7, wherein the setting, by the second PE, a status of the BFD session to a disconnected state comprises:
receiving, by the second PE, a probe packet sent by the first PE; and
stopping, by the second PE, returning a response packet to the first PE for the probe packet.

9. The method according to claim 6 or 7, wherein the setting, by the second PE, a status of the BFD session to a disconnected state comprises:
receiving, by the second PE, a probe packet sent by the first PE, wherein a probe period of the probe packet comprises a time interval for continuously transmitting two probe packets; and
stopping, by the second PE, returning a response packet to the first PE in N probe periods for the probe packet, wherein N is a positive integer greater than zero.

10. A provider edge PE, comprising:
a receiving unit, configured to receive an Ethernet segment ES auto-discovery AD route sent by a second PE, wherein the ES-AD route is used to indicate that a first link is successfully established between the second PE and a first customer edge device CE; and
a processing unit, configured to:
establish a bidirectional forwarding detection BFD session with the second PE based on the ES-AD route, wherein the BFD session is used to detect a connection status of the first link;
determine, based on the fact that the BFD session is in a disconnected state, that the first link is faulty; and
switch a packet transmitted over a second link between the first PE and the second PE to a third link between the first PE and a third PE, wherein the third PE and the second PE separately establish a connection with the first CE.

11. The PE according to claim 10, wherein the provider edge further comprises a sending unit, wherein
the sending unit is configured to send a probe packet to the second PE;
the receiving unit is configured to determine that no response packet returned by the second PE for the probe packet is received; and
the processing unit is configured to determine, in response to the fact that the first PE determines that no response packet returned by the second PE for the probe packet is received, that the first link is faulty.

12. The PE according to claim 11, wherein
the processing unit is configured to set a probe period of the probe packet, wherein one probe period comprises a time interval for continuously transmitting two probe packets; and
the receiving unit is configured to determine that no response packet returned by the second PE for the probe packet is received within N probe periods, wherein N is a positive integer greater than zero.

13. The PE according to any one of claims 10 to 12, wherein
the processing unit is configured to switch, based on a target association relationship, the packet transmitted over the second link to the third link, wherein the target association relationship indicates that a status of the BFD session is associated with the third link.

14. The PE according to claim 13, wherein the target association relationship comprises a first association relationship and a second association relationship; and
the processing unit is configured to:
determine, based on the first association relationship and the fact that the BFD session is in the disconnected state, that the second link is faulty, wherein the first association relationship indicates that the status of the BFD session is associated with the second link; and
switch, based on the second association relationship, the packet transmitted over the second link to the third link, wherein the second association relationship indicates that the second link is associated with the third link.

15. A provider edge PE, comprising:
a processing unit, configured to establish a first link with a first client edge CE device; and
a sending unit, configured to send an Ethernet segment ES auto-discovery AD route to a first PE, wherein the ES-AD route is used to indicate that the first link is successfully established between the second PE and the first CE, and the ES-AD route is used to instruct the first PE to establish a bidirectional forwarding detection BFD session with the second PE; and
the processing unit is further configured to:
establish the BFD session with the first PE, wherein the BFD session is used to detect a connection status of the first link;
determine that the first link is faulty; and
set a status of the BFD session to a disconnected state.

16. The PE according to claim 15, wherein
the processing unit is configured to:
determine, based on the fact that a signal status of a tracking interface is a faulty state, that the first link is faulty, wherein the tracking interface is an interface that is on the second PE and that is used to establish the first link with the first CE; and
set the status of the BFD session to the disconnected state based on the faulty state of the tracking interface and a third association relationship, wherein the third association relationship indicates that the signal status of the tracking interface is associated with the status of the BFD session.

17. The PE according to claim 15 or 16, wherein the provider edge further comprises a receiving unit, wherein the receiving unit is configured to receive a probe packet sent by the first PE; and
the processing unit is configured to stop returning a response packet to the first PE for the probe packet.

18. The PE according to any one of claims 15 and 16, wherein
the receiving unit is configured to receive a probe packet sent by the first PE, wherein a probe period of the probe packet comprises a time interval for continuously transmitting two probe packets; and
the processing unit is configured to stop returning the response packet to the first PE for the probe packet within N probe periods, wherein N is a positive integer greater than zero.

19. A computer-readable storage medium, comprising instructions, wherein when the instructions are executed on a computer, the computer is enabled to perform the method according to any one of claims 1 to 5.

20. A computer-readable storage medium, comprising instructions, wherein when the instructions are executed on a computer, the computer is enabled to perform the method according to any one of claims 6 to 9.

21. A packet transmission path switching system, comprising a first provider edge PE, a second provider edge PE, and at least one customer edge device CE, wherein the first PE is the PE according to any one of claims 10 to 14, and the second PE is the PE according to any one of claims 15 to 18.
